# FASCICULE DE BREVET EUROPEEN

(11) **EP 2 977 549 B1**
(45) Date de publication et mention de la délivrance du brevet: **31.05.2017**
(21) Numéro de dépôt: 14177989.2
(22) Date de dépôt: 22.07.2014
(51) Int. Cl.: F01D 5/14, B64C 11/18, B64C 11/00

(54) **AUBAGE DE TURBOMACHINE AXIALE ET TURBOMACHINE ASSOCIÉE**
BESCHAUFELUNG EINER AXIALEN STRÖMUNGSMASCHINE UND ZUGEHÖRIGE TURBOMACHINE
AXIAL TURBOMACHINE BLADING AND CORRESPONDING TURBOMACHINE

(43) Date de publication de la demande: 27.01.2016
(73) Titulaire: Safran Aero Boosters SA, 4041 Herstal (BE)
(72) Inventeur: Hiernaux, Stéphane, 4300 Waremme (BE)
(74) Mandataire: Lecomte & Partners

(56) Documents cités:
- FR-A1- 2 914 943
- GB-A- 1 518 873

## Description

### Domaine technique

L'invention a trait à une aube de turbomachine. Plus précisément, l'invention a trait à une aube de turbomachine comprenant des ramifications. L'invention traite également d'un aubage avec une rangée d'aubes ramifiées. L'invention a également trait à une turbomachine comprenant une aube et/ou un aubage selon l'invention.

### Technique antérieure

Une aube de turbomachine axiale présente généralement une pale profilée s'étendant dans le flux de la turbomachine. Pour réduire le nombre d'aubes dans une rangée tout en préservant les performances, il est connu de réaliser une aube avec des ramifications.

Le document FR 2 914 943 A1 divulgue une aube de soufflante de turbomachine axiale. L'aube comprend une première portion qui s'étend depuis un moyeu de soufflante, et plusieurs autres portions qui prolongent radialement vers l'extérieur la première portion. Toutes ces portions sont reliées par une plateforme disposée à l'extrémité externe de la première portion. Cependant, cette configuration d'aube présente une rigidité réduite. La présence de la plateforme en milieu de veine peut perturber l'écoulement. Lors du fonctionnement, les ramifications sont soumises à des vibrations et des efforts qui peuvent détériorer l'aube. L'aube présente une masse importante. La présence des ramifications sollicite la plateforme ; sa résistance mécanique impose de l'épaissir ce qui perturbe l'écoulement.

### Résumé de l'invention

### Problème technique

L'invention a pour objectif de résoudre au moins un des problèmes posés par l'art antérieur. Plus précisément, l'invention a pour objectif d'augmenter la rigidité d'une aube de turbomachine avec des ramifications. L'invention a également pour objectif de rigidifier un aubage de turbomachine avec des aubes ramifiées. L'invention a également pour objectif de protéger la turbomachine en cas d'ingestion.

### Solution technique

L'invention a pour objet un aubage de turbomachine axiale comprenant une rangée circulaire ou semi-circulaire d'aubes s'étendant radialement, chaque aube comprenant une pale et des ramifications latérales, chaque ramification comportant une extrémité jointe à la pale et une extrémité opposée radialement à la pale, remarquable en ce qu'il comprend en outre une virole ou un segment de virole lié(e) à au moins deux extrémités opposées de deux ramifications voisines de deux aubes voisines et/ou d'une même aube de sorte à relier les pales à la virole ou au segment de virole via leurs ramifications latérales.

Selon un mode avantageux de l'invention, au moins une ou chaque ramification est généralement inclinée par rapport à la direction radiale et/ou par rapport à toute perpendiculaire à la surface de la virole ou du segment de virole.

Selon un mode avantageux de l'invention, au moins une ou chaque ramification comprend une portion radiale s'étendant perpendiculairement depuis la virole ou le segment de virole.

Selon un mode avantageux de l'invention, la rangée d'aube comprend au moins deux aubes avec des ramifications jointes à la virole et une aube dont la pale comporte une extrémité jointe à la virole, éventuellement lesdites aubes sont également liées les unes aux autres du côté radial opposé à ladite virole.

Selon un mode avantageux de l'invention, les ramifications et la virole forment un tuyau, éventuellement continu, traversant la pale.

Selon un mode avantageux de l'invention, au moins une ou chaque ramification s'étend sur la majorité axiale de la virole.

Selon un mode avantageux de l'invention, au moins une ou chaque ramification comprend une portion de fixation traversant une ouverture formée dans la virole, la portion de fixation comprenant un orifice de fixation formé sur la ramification ou une surface avec des aspérités scellées à la virole.

Selon un mode avantageux de l'invention, les ramifications d'au moins une aube ou de chaque aube sont venues de matière avec la virole et la pale associée ; les ramifications, les pales et la virole étant réalisées par fabrication additive à base de poudre, éventuellement métallique.

Selon un mode avantageux de l'invention, au moins une ou chaque ramification comprend un bord d'attaque et un bord de fuite, au moins un, préférentiellement chaque bord d'attaque et chaque bord de fuite s'étendent perpendiculairement depuis la virole.

Selon un mode avantageux de l'invention, les ramifications d'au moins deux aubes voisines sont jointives, éventuellement les ramifications voisines de chaque paire d'aubes voisines sont jointives.

Selon un mode avantageux de l'invention, les aubes forment plusieurs jeux d'aubes, les ramifications d'un jeu d'aubes étant jointives entre ramifications voisines d'aubes voisines du même jeu, les ramifications voisines d'au moins deux jeux voisins d'aubes étant à distance selon la direction circonférentielle de la virole ou du segment de virole.

Selon un mode avantageux de l'invention, les ramifications jointives de deux aubes voisines délimitent entre elle un chenal le long de toute la pale, éventuellement continu et distant radialement de la virole.

Selon un mode avantageux de l'invention, la virole est une première virole, ou le segment est un premier segment de virole, l'aubage comprenant en outre une deuxième virole ou un deuxième segment de virole concentrique à la première virole ou au premier segment de virole respectivement, les aubes s'étendant radialement entre les viroles ou les segments de virole.

Selon un mode avantageux de l'invention, au moins une aube ou chaque aube comprend des ramifications liées à la première virole et d'autres ramifications liées à la deuxième virole ou au premier segment de virole et au deuxième segment de virole respectivement.

Selon un mode avantageux de l'invention, un aubage peut comprendre au moins trois aubes, préférentiellement au moins quatre aubes.

Selon un mode avantageux de l'invention, un aubage s'étend au moins sur un sixième, préférentiellement sur au moins sur un quart, plus préférentiellement sur un demi-cercle.

Selon un mode avantageux de l'invention, les extrémités des ramifications sont des extrémités opposées selon la hauteur de la pale.

Selon un mode avantageux de l'invention, les ramifications comprennent des bords de jonction au moins partiellement confondus de sorte à joindre lesdites ramifications l'une sur l'autre le long de la pale.

Selon un mode avantageux de l'invention, les bords de jonctions des ramifications sont joints sur la majorité, préférentiellement sur la totalité de leurs longueurs L et/ou de la longueur de la corde de la pale.

Selon un mode avantageux de l'invention, les pales et/ou les ramifications comprennent des bords d'attaque et des bords de fuite, le bord d'attaque de la pale étant prolongé radialement par les bords d'attaque des ramifications, et/ou le bord de fuite de la pale étant prolongé radialement par les bords de fuite des ramifications.

Selon un mode avantageux de l'invention, les bords d'attaque et les bords de fuite des ramifications sont tangents, respectivement, au bord d'attaque et au bord de fuite de la pale.

Selon un mode avantageux de l'invention, l'épaisseur moyenne des profils aérodynamiques des ramifications est inférieure à l'épaisseur moyenne des profils de la pale.

Selon un mode avantageux de l'invention, chaque pale comprend une surface intrados et une surface extrados, la surface intrados et/ou la surface extrados de la pale est tangente à la surface intrados d'une ramification et/ou à la surface extrados d'une ramification.

Selon un mode avantageux de l'invention, les ramifications présentent des mêmes hauteurs radiales et/ou des mêmes longueurs axiales.

Selon un mode avantageux de l'invention, au moins une ou chaque ramification présente une hauteur H2 supérieure à 5%, préférentiellement supérieure à 10%, plus préférentiellement supérieure à 20% de la hauteur H1 de la pale.

Selon un mode avantageux de l'invention, l'aube est une aube de compresseur, éventuellement basse pression, ou une aube de turbine, ou une aube de soufflante.

Selon un mode avantageux de l'invention, la longueur de la corde de la pale est supérieure ou égale à la corde de chaque ramification, ou inférieure à la corde de chaque ramification.

Selon un mode avantageux de l'invention, du côté de la pale, les ramifications convergent l'une vers l'autre selon leur hauteur H2 et leur longueur L.

Selon un mode avantageux de l'invention, la pale se divise selon son épaisseur en plusieurs ramifications.

Selon un mode avantageux de l'invention, les ramifications délimitent radialement la pale.

L'invention a également pour objet un aubage avec une rangée d'aubes comprenant chacune une pale prolongée radialement par des ramifications, les ramifications des aubes voisines étant jointives de sorte à relier les aubes via leurs ramifications, éventuellement, les ramifications des aubes sont disposées à une même extrémité de la pale ou à chaque extrémité radiale de la pale de sorte à relier les aubes entre elles à chaque extrémité de pale.

L'invention a également pour objet une turbomachine comprenant au moins un aubage, remarquable en ce que le au moins un ou chaque aubage est conforme à l'invention, préférentiellement la turbomachine comprend un compresseur avec des rangées d'aubages, au moins un ou chaque aubage de compresseur étant conforme à l'invention.

### Avantages apportés

L'invention permet de rigidifier l'aube. En effet, les pales de ramification forment une cornière à l'extrémité de la pale de jonction là où elles sont jointives. Le bord de la pale de jonction est rigidifié, sa résistance mécanique ne repose plus uniquement sur la partie centrale de la pale de jonction. De ce fait, la partie centrale peut être amincie et optimisée davantage. Le gain aérodynamique et le renforcement permettent de réduire le nombre d'aube dans un étage d'aubes.

L'invention permet de renforcer l'aubage en formant des jonctions entre les ramifications latérales voisines. La virole ou le segment de virole forme un pont liant les extrémités des ramifications au sein d'une même aube, ou d'une aube voisine à l'autre. Ainsi, les ramifications sont protégées contre les vibrations qui pourraient leur être nocives.

La présence de ramifications entre une pale et une virole multiplie les ancrages, les zones de transmission et de répartition d'efforts. Le fait de joindre deux ramifications d'aubes voisines permet en plus de répartir des efforts dans différentes aube. Par ailleurs, ménager des écarts dans une rangée de ramifications liées permet d'optimiser la souplesse, la rigidité et la transmission d'efforts dans un aubage.

L'invention permet d'augmenter le nombre de pales pouvant intercepter un corps en cas d'ingestion. Le corps peut être ralenti, et éventuellement être amorti ou divisé davantage grâce aux bords d'attaque rajoutés. De la sorte les corps ingérés sont réduits plus en amont, ce qui permet de protéger les éléments en aval. Le positionnement des ramifications en extrémité de pale permet d'agir efficacement contre les fragments à proximité des parois des veines fluides, lieux où lesdits fragments se retrouvent fréquemment en raison des dynamiques d'écoulement et/ou des inclinaisons des veines.

La configuration où les ramifications se chevauchent axialement permet de former des renforts rigidifiant la pale. Cette dernière peut alors être amincie et allégée car elle est moins soumise aux phénomènes de torsion. Les profils de la pale peuvent être mieux adaptés aux besoins aérodynamiques. Cette configuration renforce les liens entre les ramifications, ce qui les rend plus résistantes aux ingestions.

### Brève description des dessins

La figure 1 représente une turbomachine axiale selon l'invention.
La figure 2 est un schéma d'un compresseur de turbomachine selon l'invention.
La figure 3 illustre un aubage selon un premier mode de réalisation de l'invention.
La figure 4 illustre un aubage selon un deuxième mode de réalisation de l'invention.
La figure 5 illustre un aubage selon un troisième mode de réalisation de l'invention.
La figure 6 illustre un aubage selon un quatrième mode de réalisation de l'invention.
La figure 7 illustre un aubage selon un cinquième mode de réalisation de l'invention.
La figure 8 illustre une aube selon un sixième mode de réalisation de l'invention.
La figure 9 illustre une aube selon un septième mode de réalisation de l'invention.
La figure 10 illustre une aube selon un huitième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale.

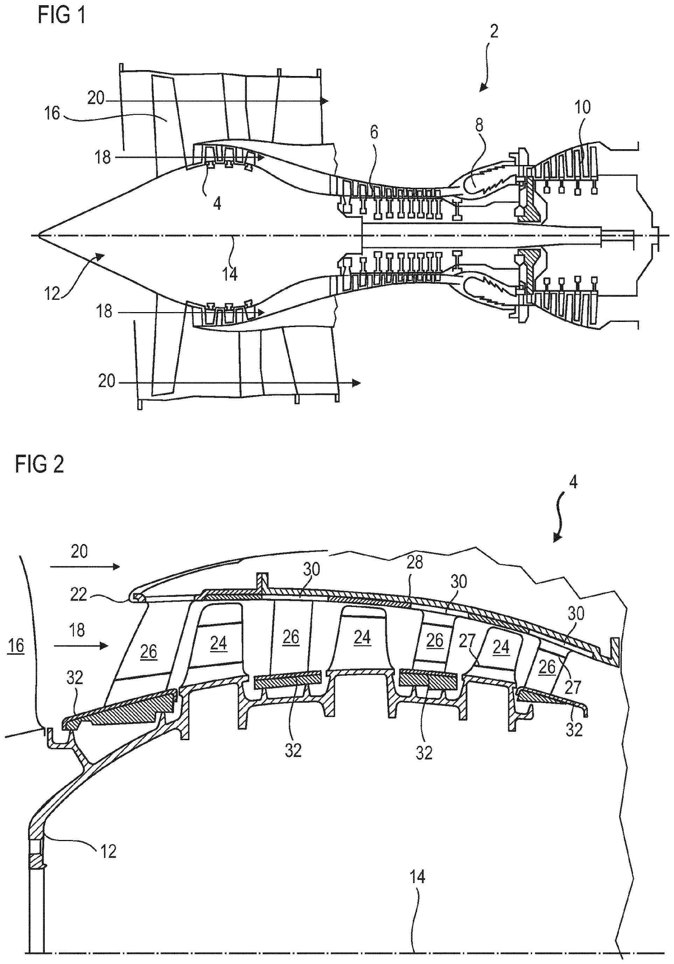

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction. Les flux primaire 18 et secondaire 20 sont des flux annulaires, ils sont canalisés par le carter de la turbomachine. A cet effet, le carter présente des parois cylindriques ou viroles qui peuvent être internes et externes.

La turbomachine peut comprendre un compresseur ou une portion de compresseur dans lequel le flux circule radialement. Elle peut également comprendre une turbine analogue. Les aubes, en particulier leurs bords d'attaque et/ou leurs bords de fuite, peuvent s'étendre radialement ou axialement.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 peut comprendre plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement suivant leur hauteur au travers du flux 18, éventuellement radialement, depuis un carter extérieur 28, et peuvent y être fixées à l'aide d'un axe éventuellement formé sur une plateforme de fixation.

Les aubes (24, 26) peuvent être fixées individuellement au stator ou au rotor 12, ou être regroupées en aubages comprenant plusieurs aubes formant une rangée selon la circonférence. Les aubes (24, 26) peuvent être regroupées en caissons aubagés, avec plusieurs aubes et une virole, ou avec deux viroles concentriques (30, 32) entre lesquelles s'étendent radialement les aubes (24, 26).

Un aubage peut être monobloc ; il peut être venu de matière, éventuellement grâce à un procédé de fabrication additive. Il peut également être réalisé en soudant les unes au autres des ramifications et des pales.

Les aubes rotoriques 24 et/ou les aubes statoriques 26 du compresseur peuvent être ramifiées. Les configurations de ramification peuvent varier d'une rangées d'aube à l'autre, être ramifiée en pied et/ou en tête d'aube. Les jonctions 27 entre les ramifications et les pales d'aubes sont visibles.

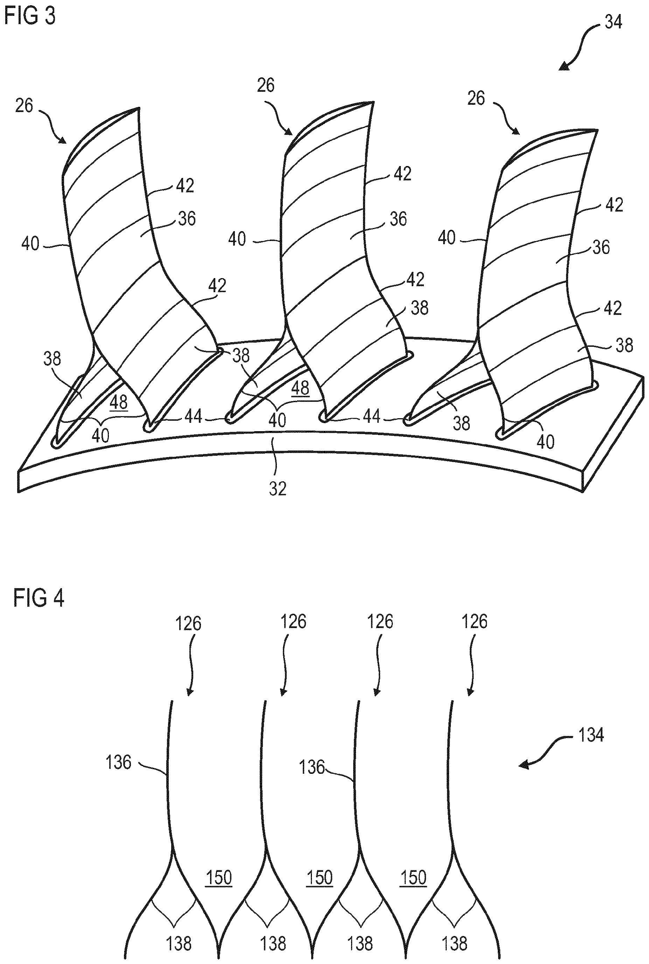

La figure 3 représente un aubage 34 de turbomachine selon un premier mode de réalisation de l'invention. L'aubage 34 représenté est statorique, il pourrait également être rotorique.

Un aubage 34 peut être entendu comme une surface, éventuellement rigide, permettant de guider un fluide en écoulement. Il peut être entendu comme un ensemble d'aubes 26. L'aubage peut être et/ou peut comprendre une rangée d'aubes, avec plusieurs aubes 26, formant une portion de rangée annulaire. Les aubes 26 sont disposées sur une paroi, telle une virole ou une portion de virole, éventuellement une portion de virole interne 32. La paroi, ou portion de virole peut avoir une forme de cercle ou d'arc de cercle.

Chaque aube 26 peut s'élever, éventuellement s'étendre radialement, depuis la virole 32. Chaque aube 26 comprend une pale 36 et des ramifications 38. La pale 36 peut être une pale de jonction 36 réunissant les ramifications 38, ces dernières pouvant être des pales de ramification 38. Les ramifications 38 d'une même aube sont écartées les unes des autres selon la direction circonférentielle.

Chaque pale 36 et/ou chaque ramificaiton 38 peut présenter une forme générale de feuille qui peut généralement s'étendre selon un plan principal, la feuille peut être sensiblement incurvée et/ou présenter une épaisseur variable. Une pale présente un bord d'attaque 40 et un bord de fuite 42 qui délimitent une surface intrados et une surface extrados.

Les ramifications 38 peuvent être des ramifications latérales 38, en ce sens qu'elles s'écartent latéralement de la pale 36 dans la direction de son épaisseur et/ou perpendiculairement à la corde de la pale 36. Chaque ramification 38 présente deux extrémités opposées suivant sa hauteur, éventuellement radiale, de la pale. L'une des extrémités est jointe à la pale 36 et l'autre est jointe à la virole 32 qui forme un support. La virole 32 et les aubes peuvent être venues de matière, ou la virole peut comprendre des ouvertures 44 dans lesquelles les extrémités des ramifications sont fixées et/ou scellées.

La virole 32 peut être une portion de carter externe, ou une paroi de rotor, telle une paroi de tambour de rotor. La virole peut former un cercle ou une portion angulaire de cercle telle une bande de matière arquée.

La hauteur d'une ramification 38, d'une pale 36, ou de l'aube 26 peut être perpendiculaire au bord d'attaque et/ou au bord de fuite de la pale, et/ou orienté perpendiculairement au fluide. La pale et les ramifications sont destinées à s'étendre dans le flux de la turbomachine.

Les ramifications 38 des aubes voisines 26 sont distantes les unes des autres, elles pemettent un passage entre les aubes le long de la surface externe de la virole 32. En combinaison avec la virole, les ramifications d'au moins une ou de chaque aube forment un tuyau 48 qui traverse l'aube 26. Ce tuyau 48 est configuré pour accompagner un écoulement de la turbomachine. Les extrémités supérieures des pales sont libres, elles forment des tranches.

La figure 4 représente un aubage 134 selon un deuxième mode de réalisation de l'invention. Cette figure 4 reprend la numérotation des figures précédentes pour les éléments identiques ou similaires, la numération étant toutefois incrémentée de 100. La figure montre une rangée d'aube 126, la présence d'une virole est optionnelle. Chaque aube 126 est représentée sous la forme d'une courbe, qui peut correspondre à un bord d'attaque, et/ou à un bord de fuite, et/ou à une courbe d'empilement de profils aérodynamique de pale ou de ramification.

La rangée comprend plusieurs aubes 126, chacune avec des ramifications 138 à une même extrémité ou d'un même côté de la pale 136. Les ramifications 138 s'étendent selon la circonférence en direction de l'aube 126 voisine, et en particulier des ramifications 138 des aubes voisines. Les ramifications voisines 138 de deux aubes voisines 126 sont jointives, par exemple à une extrémité radiale de l'aube, telle l'extrémité opposée à celle recevant la pale. Ainsi, les aubes 126 forment une chaînes d'aubes, avec continuité de matière circonférentielle, qui sont reliées les unes aux autres à l'aide de leur ramifications 138.

Par jointives, on peut entendre que les ramifications 138 ou les pales de ramification 138 comprennent des bords jointifs, ou confondus. A la jonction des ramifications, l'épaisseur totale peut être inférieure à l'addition des épaisseurs de chaque ramification.

Au moins deux ou chaque paire de ramifications 138 voisines d'aubes voisines 126 peuvent former entre elles un chenal 150. Un chenal 150 peut être entendu comme une dépression allongée, tel un passage délimité latéralement entre deux parois de ramification en regard.

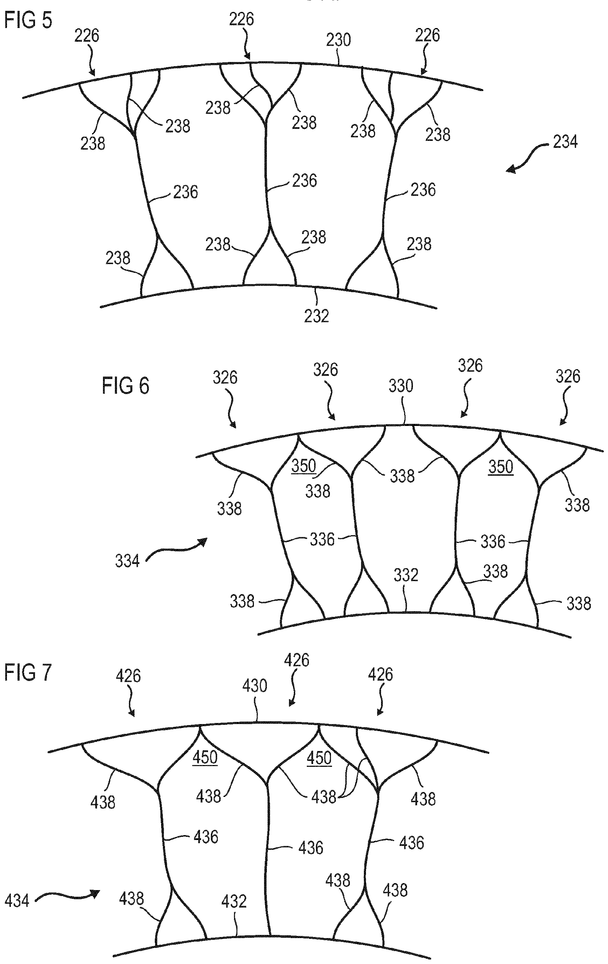

La figure 5 représente un aubage 234 selon un troisième mode de réalisation de l'invention. Cette figure 5 reprend la numérotation des figures précédentes pour les éléments identiques ou similaires, la numération étant toutefois incrémentée de 200.

L'aubage 236 comprend une rangée d'aubes 226 avec plusieurs aubes formant une portion angulaire de rangée annulaire. La rangée peut former un cercle. Les aubes 226 sont disposées sur une paroi, telle une virole (230, 232) ou une portion de virole. La paroi, ou portion de virole peut avoir une forme de cercle ou d'arc de cercle.

L'aubage peut être un caisson aubagé. Il peut comprendre au moins trois aubes 226 avec chacune une pale et des ramifications prolongeant la pale suivant la hauteur radiale de la pale. Les aubes, y compris leurs ramifications, peuvent être à distance les unes des autres.

L'aubage 236 comprend deux segments de viroles, tel un segment de virole intérieure 232 et un segment de virole extérieur 230, qui peuvent être entendus comme des secteurs angulaires de tubes. Les segments sont concentriques, et définissent une veine fluide dont le milieu selon la hauteur radiale est situé au niveau de la pale, éventuellement à mi-hauteur.

Au moins une ou chaque aube 226 peut comprendre deux jeux de ramifications 238, qui sont chacun joints à une extrémité de la pale 236 et à un segment de virole (230, 232). De la sorte, les segments de viroles sont liés l'un à l'autre via, dans l'ordre, des premiers jeux de ramifications 238, des pales 236, des deuxièmes jeux de ramifications 238. Chaque ramification est jointe à l'aube et/ou à une virole sur la majorité, préférentiellement sur la totalité de sa longueur.

Les jeux de ramifications 238 d'au moins une aube ou de chaque aube, peuvent présenter des nombres de ramifications différents. Eventuellement, les jeux ayant le plus de ramifications 238 sont du même côté de la pale 236. Les agencements de ramifications peuvent varier d'un jeu voisin à l'autre.

Par exemple, un jeu peut comprendre au moins trois ramifications, dont deux ramifications 238 de côté selon la circonférence entre lesquelles est disposée au moins une ramification 238 centrale. Ces ramifications 238 peuvent toutes être jointives, en présentant chacune un bord de jonction ; lesdits bords étant confondus. Eventuellement, au moins une ou chaque aube 226 présente des ramifications 238 qui sont jointives à différentes hauteurs de la pale 236. Une ramification 238 peut s'étendre depuis une autre ramification 238 en restant à distance d'une autre ramification et/ou de la pale 236. Une telle ramification 238 peut former une béquille qui rigidifie l'aubage 234. Une ramification 238 peut s'étendre latéralement d'un côté de la pale 236, puis de l'autre, ou peut ne s'étendre que d'un côté de la pale 236.

La figure 6 représente un aubage 334 selon un quatrième mode de réalisation de l'invention. Cette figure 6 reprend la numérotation des figures précédentes pour les éléments identiques ou similaires, la numération étant toutefois incrémentée de 300. L'aubage représenté est statorique, alternativement il pourrait être lié au rotor.

L'aubage 334 comprend plusieurs jeux d'aubes. Chaque jeu peut former une portion angulaire de rangée annulaire d'aubes. Chaque jeu d'aubes comprend plusieurs aubes 326, chacune avec une pale 336 et des ramifications 338 prolongeant la pale 336 selon sa hauteur, éventuellement radiale. Chaque aube 326 peut comprendre deux jeux de ramifications. D'un côté radialement, des ramifications 338 voisines d'un jeu d'aubes 326 peuvent être jointives, de l'autre côté les ramifications 338 restent à distance. Les jeux d'aubes peuvent être à distance les uns des autres. En particulier, les ramifications d'un jeu d'aubes peuvent être distantes, selon la circonférence, de chaque ramification 338 d'un jeu d'aubes voisin.

La figure 7 représente un aubage 434 selon un cinquième mode de réalisation de l'invention. Cette figure 7 reprend la numérotation des figures précédentes pour les éléments identiques ou similaires, la numération étant toutefois incrémentée de 400. Des numéros spécifiques sont utilisés pour les éléments spécifiques à ce mode de réalisation.

L'aubage 434 comprend une rangée d'aubes 426 formant au moins une portion de rangée annulaire de turbomachine. Les aubes 426 sont disposées sur une paroi, telle une virole ou une portion de virole (430, 432). La paroi, ou portion de virole peut avoir une forme de cercle ou d'arc de cercle.

La rangée peut présenter un arrangement mixte d'aubes 426. Certaines aubes 426 peuvent être libres de ramifications à au moins une extrémité ou à chaque extrémité. Le nombre de ramifications 438 d'un même côté radial de l'aubage peut varier entre les aubes 426. Certaines, éventuellement toutes les ramifications 438 voisines d'aubes 426 différentes peuvent être jointives. D'un côté radial de l'aubage, les ramifications peuvent former une rangée et/ou peuvent être jointes les unes aux autres de sorte à former une chaîne de ramifications 438, qui peuvent être également jointes à une virole 430 en plus des pales 436 associées. Cette double jonction des ramifications rigidifie la virole et donc l'aubage contre des efforts de torsions.

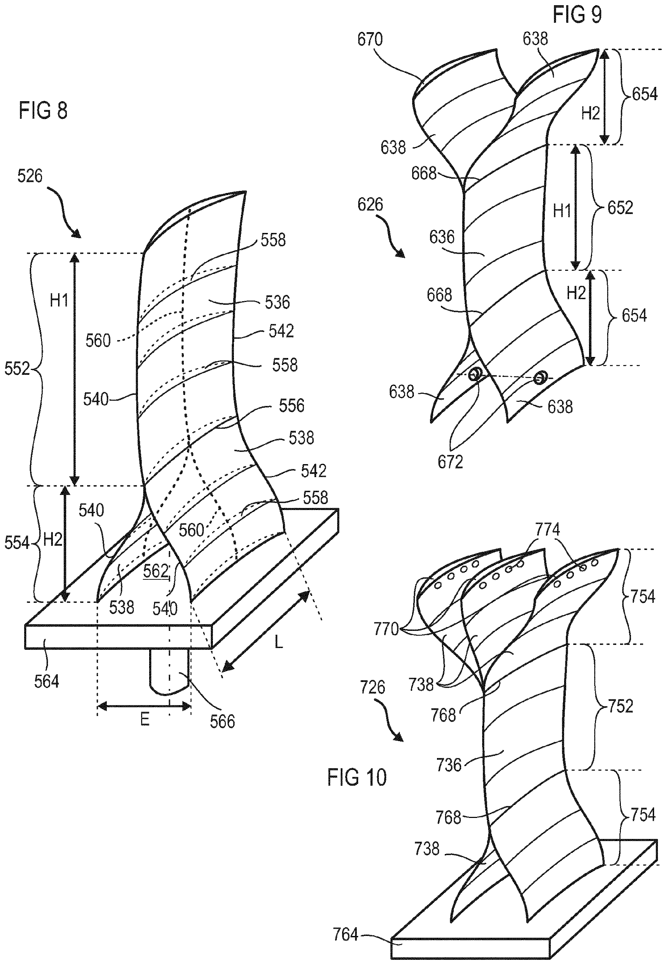

La figure 8 représente une aube 526 selon un sixième mode de réalisation de l'invention. Cette figure 8 reprend la numérotation des figures précédentes pour les éléments identiques ou similaires, la numération étant toutefois incrémentée de 500. Des numéros spécifiques sont utilisés pour les éléments spécifiques à ce mode de réalisation. L'aube 526 peut être une aube statorique 526 telle que représentée à la figure 2.

L'aube 526 comprend une pale 536, et au moins deux ramifications 538, éventuellement trois ou davantage de ramifications 538. La pale 536 peut être une pale de jonction 536 ou une pale principale 536, en ce sens que sa hauteur et/ou son épaisseur est supérieure à celle de chaque ramification 538. La pale de jonction 536 forme une portion de jonction 552, et les ramifications 538 forment une portion ramifiée 554, lesdites portions étant superposées selon la hauteur.

Les ramifications 538 peuvent être des pales de ramification 538 qui sont jointes par la pale de jonction 536. A cet effet, elles peuvent comprendre des bords de jonction qui sont au moins partiellement, préférentiellement totalement, confondu, suivant la corde de la pale de jonction. Les bords de jonctions 556 peuvent former des extrémités, des délimitations des pales de ramification 538. La pale de jonction 536 et les pales de ramification 538 sont destinées à être chacune disposée dans l'écoulement de la turbomachine.

La pale de jonction 536 est disposée dans le prolongement des pales de ramification 538, à leur jonction. La pale de jonction 536 peut former la jonction entre les pales de ramification 538. Celles-ci peuvent former des divisions de la pale de jonction. Elles peuvent former des branches 538 se séparant de la pale de jonction au niveau d'un embranchement. La pale de jonction 536 peut se diviser, se partager en pales de ramification. Les ramifications peuvent être ancrées les unes aux autres et/ou les unes sur les autres.

La pale de jonction 536 et/ou chaque pale de ramification 538 peut comprendre un bord d'attaque 540, un bord de fuite 542. La pale de jonction et/ou chaque pale de ramification peut comprendre une surface intrados et une surface extrados qui s'étendent du bord d'attaque 540 au bord de fuite 542 correspondant. La surface intrados et la surface extrados de la pale de jonction est tangente, éventuellement tout le long de sa corde, aux surfaces voisines des pales de ramification 538.

La pale de jonction 536 et/ou chaque pale de ramification 538 peut comprendre des profils aérodynamiques 558, éventuellement cambrés, qui sont empilés suivant la hauteur, éventuellement radiale. Les centres de gravités des profils aérodynamiques 558 de la pale de jonction 536 et/ou de chaque pale de ramification 538 peuvent décrire une courbe d'empilement 560. Les courbes d'empilement 560 des pales de ramification 538 peuvent être dans le prolongement radial, et/ou axial, et ou circonférentiel de la courbe d'empilement 560 de la pale de jonction 536, éventuellement en s'en décalant progressivement. Les pales de ramification peuvent définir entre elles un canal 562, éventuellement à distance de la pale de jonction 536. La hauteur H1 de la pale de jonction 536 peut être supérieure ou égale à la hauteur H2 de chaque pale de ramification 538.

Les bords d'attaque 540, et/ou les bords de fuite 542, et/ou les courbes d'empilement 560 de chaque pale de ramification 538 peuvent présenter une variation, éventuellement une augmentation, et/ou une inversion de courbure par rapport, respectivement, au bord d'attaque 540, et/ou au bord de fuite 542, et/ou à la courbe d'empilement 560 de la pale de jonction 536.

L'épaisseur maximale des profils aérodynamiques 558 de la pale de jonction 536 peut être supérieure à l'épaisseur maximale des profils aérodynamiques 558 de chaque pale de ramification 538. La surface de chaque profil aérodynamique 558 de la pale de jonction peut être supérieure ou égale à la surface de chaque profil aérodynamique d'au moins une ou de chaque ramification. L'addition des surfaces des profils aérodynamiques des ramifications à une hauteur donnée peut être supérieure ou égale à la surface de chaque profil aérodynamique de la pale.

L'aube 526 comprend au moins deux pales de ramification 538 éventuellement trois ou quatre, ou davantage encore à une même extrémité. L'aube 526 peut comprendre un support 564 joint aux pales de ramification. Eventuellement le support 564 est une plateforme de fixation 564, par exemple muni d'un axe de fixation 566. Les pales de ramification 538, la pale de jonction 536, et éventuellement le support 562, peuvent être venu de matière. Ils peuvent être réalisés par fabrication additive avec une poudre de titane.

Au moins une ou chaque pale de ramification 538 peut comprendre des parties, selon la hauteur de l'aube, inclinées les unes par rapports aux autres. Ces parties peuvent être courbes, et présenter des variations, ou des inversions de courbures. Suivant la hauteur, l'axe moyen de la courbe d'empilement 560 d'au moins une ou de chaque pale de ramification 538 est inclinée par rapport à celui de la pale de jonction 536. Ces géométries peuvent être observées au niveau du bord d'attaque 540, et/ou du bord de fuite 542, et/ou de la courbe d'empilement 560 des profils 558.

L'écart E entre les pales de ramification 538, mesuré à l'opposé de la pale de jonction 536, au niveau de leurs bords d'attaque 540, ou au niveau de leurs bords de fuite 542, ou au niveau la largeur maximale de passage est supérieure à la majorité de l'épaisseur moyenne ou maximale de la pale de jonction 536. L'écart E peut être inférieur à la longueur L des pales de ramification 538, et/ou inférieur à la hauteur H2 des pales de ramification. Pour au moins une ou chaque pale de ramification 538, la longueur L peut être supérieure ou égale à la hauteur H2.

La figure 9 représente une aube 626 selon un septième mode de réalisation de l'invention. Cette figure 9 reprend la numérotation des figures précédentes pour les éléments identiques ou similaires, la numération étant toutefois incrémentée de 600. Des numéros spécifiques sont utilisés pour les éléments spécifiques à ce mode de réalisation.

L'aube 626 comprend deux portions ramifiées 654 jointes par une portion de jonction 652. La pale de jonction 636 de l'aube 626 comprend deux extrémités 668 opposées selon sa hauteur, par exemple des extrémités radiales, telles une tête et un pied. La pale de jonction 636 peut comprendre des pales de ramification 638 à chacune de ses extrémités radiales, lesdites pales de ramification formant un premier jeu et un deuxième jeu de pales de ramification 638, chaque jeu étant joint à une des extrémités 668 de la pale de jonction 636. La hauteur H2 des pales de ramification peut varier d'un jeu à l'autre, et peut rester inférieure à la hauteur H1 de la pale de jonction 636.

Des extrémités de pales de ramification peuvent être des tranches libres 670. Elles peuvent former des tranches en forme de profils aérodynamiques d'aubes cambrés. Les extrémités peuvent présenter des moyens de fixation tels des axes de fixations. Les extrémités à une même extrémité d'aube peuvent chacune comprendre un orifice de fixations 672, les orifices 672 sont éventuellement alignés selon la rangée que forment les pales de ramification associées.

La figure 10 représente une aube 726 selon un huitième mode de réalisation de l'invention. Cette figure 10 reprend la numérotation des figures précédentes pour les éléments identiques ou similaires, la numération étant toutefois incrémentée de 700. Des numéros spécifiques sont utilisés pour les éléments spécifiques à ce mode de réalisation.

L'aube 726 comprend une pale de jonction 736 avec deux extrémités 768 opposées selon la hauteur H1, chaque extrémité 768 comprenant des ramifications 738 prolongeant la pale dans le sens de la hauteur. Les ramifications forment un premier jeu de ramifications à une extrémité 768 de la pale 736, et un deuxième jeu de ramifications 738 à l'autre extrémité 768. Les extrémités opposées 768 comprennent un nombre différent de ramifications 738.

Les jeux de ramifications peuvent être superposés selon la hauteur de l'aube 726 tout en étant séparés par la pale 736. L'un des jeux peut recouvrir l'autre jeu, le recouvrement pouvant être selon la corde moyenne de la pale et/ou selon l'épaisseur de la pale.

Un jeu de ramifications peut être lié à un support 764, telle une plateforme de fixation 764. Le jeu de ramifications du côté opposé au support 764 peut présenter des bords libres 770, et éventuellement des moyens de fixation 774 telles des bosses 774 ou des aspérités 774. Ces moyens peuvent optionnellement être utilisés pour sceller les ramifications à une paroi, à un support, ou à une virole.

Les aubes du premier au cinquième mode de réalisation de l'invention peuvent être selon le sixième, ou le septième ou le huitième mode de réalisation de l'invention. Un aubage peut comprendre des ramifications à chaque extrémité, suivant la hauteur des pales. Le nombre de ramifications peut être différent à chacune de ces extrémités. Les aubes du septième et du huitème mode de réalisation peuvent reprendre les configurations de l'aube du sixième mode de réalisation ; en particulier tout ce qui concerne, l'agencement des bords d'attaque, les bords de fuite, les bords de jonctions, les courbes d'empilement, l'agencement des pales de ramification par rapport à la pale de jonction.

## Revendications

1. Aubage (34; 234; 334 ; 434) de turbomachine axiale (2) comprenant une rangée circulaire ou semi-circulaire d'aubes (24 ; 26 ; 226 ; 326 ; 426) s'étendant radialement, chaque aube comprenant une pale (36 ; 236 ; 336 ; 436) et des ramifications (38 ; 238 ; 338 ; 438) latérales, chaque ramification comportant une extrémité jointe à la pale et une extrémité opposée radialement à la pale,
**caractérisé en ce qu'**il comprend en outre
une virole ou un segment de virole (30 ; 32 ; 230 ; 232 ; 330 ; 332 ; 430 ; 432) lié(e) à au moins deux extrémités opposées de deux ramifications (38 ; 138 ; 238 ; 338 ; 438) voisines de deux aubes voisines (24 ; 26 ; 226 ; 326 ; 426) et/ou d'une même aube de sorte à relier les pales (36 ; 236 ; 336 ; 436) à la virole (30 ; 32 ; 230 ; 232 ; 330 ; 332 ; 430 ; 432) ou au segment de virole via leurs ramifications (38 ; 238 ; 338 ; 438) latérales.

2. Aubage (34 ; 234 ; 334 ; 434) selon la revendication 1, **caractérisé en ce qu'**au moins une ou chaque ramification (38 ; 238 ; 338 ; 438) est généralement inclinée par rapport à la direction radiale et/ou par rapport à toute perpendiculaire à la surface de la virole ou du segment de virole (30 ; 32 ; 230 ; 232 ; 330 ; 332 ; 430 ; 432).

3. Aubage (34 ; 234 ; 334 ; 434) selon l'une des revendications 1 à 2, **caractérisé en ce qu'**au moins une ou chaque ramification (38 ; 238 ; 338 ; 438) comprend une portion radiale s'étendant perpendiculairement depuis la virole ou le segment de virole (30 ; 32 ; 230 ; 232 ; 330 ; 332 ; 430 ; 432).

4. Aubage (434) selon l'une des revendications 1 à 3, **caractérisé en ce que** la rangée d'aube comprend au moins deux aubes (426) avec des ramifications (438) jointes à la virole (432) et une aube dont la pale (436) comporte une extrémité jointe à la virole (432), éventuellement lesdites aubes (426) sont également liées les unes aux autres du côté radial opposé à ladite virole (432).

5. Aubage (34 ; 234 ; 334 ; 434) selon l'une des revendications 1 à 4, **caractérisé en ce que** les ramifications (38 ; 238 ; 338 ; 438) et la virole (30 ; 32 ; 230 ; 232 ; 330 ; 332 ; 430 ; 432) forment un tuyau (48), éventuellement continu, traversant la pale (36 ; 236 ; 336 ; 436).

6. Aubage (34 ; 234 ; 334 ; 434) selon l'une des revendications 1 à 5, **caractérisé en ce qu'**au moins une ou chaque ramification (38 ; 238 ; 338 ; 438) s'étend sur la majorité axiale de la virole (30 ; 32 ; 230 ; 232 ; 330 ; 332 ; 430 ; 432).

7. Aubage (34) selon l'une des revendications 1 à 6, **caractérisé en ce qu'**au moins une ou chaque ramification (38) comprend une portion de fixation traversant une ouverture (44) formée dans la virole (32), la portion de fixation comprenant un orifice de fixation formé sur la ramification ou une surface avec des aspérités scellées à la virole (32).

8. Aubage (234 ; 334 ; 434) selon l'une des revendications 1 à 6, **caractérisé en ce que** les ramifications (238 ; 338 ; 438) d'au moins une aube ou de chaque aube (226 ; 326 ; 426) sont venues de matière avec la virole (230 ; 232 ; 330 ; 332 ; 430 ; 432) et la pale associée ; les ramifications, les pales et la virole étant réalisées par fabrication additive à base de poudre, éventuellement métallique.

9. Aubage (34 ; 234 ; 334 ; 434) selon l'une des revendications 1 à 8, **caractérisé en ce qu'**au moins une ou chaque ramification (38 ; 238 ; 338 ; 438) comprend un bord d'attaque (40) et un bord de fuite (42), au moins un, préférentiellement chaque bord d'attaque (40) et chaque bord de fuite (42) s'étendent perpendiculairement depuis la virole (30 ; 32 ; 230 ; 232 ; 330 ; 332 ; 430 ; 432).

10. Aubage (334 ; 434) selon l'une des revendications 1 à 9, **caractérisé en ce que** les ramifications (338 ; 438) d'au moins deux aubes (326 ; 426) voisines sont jointives, éventuellement les ramifications voisines de chaque paire d'aubes voisines sont jointives.

11. Aubage (34 ; 234 ; 334 ; 434) selon la revendication 10, **caractérisé en ce que** les aubes (326) forment plusieurs jeux d'aubes, les ramifications (338) d'un jeu d'aubes étant jointives entre ramifications (338) voisines d'aubes voisines du même jeu, les ramifications (338) voisines d'au moins deux jeux voisins d'aubes (326) étant à distance selon la direction circonférentielle de la virole ou du segment de virole (330 ; 320).

12. Aubage (334 ; 434) selon l'une des revendications 10 à 11, **caractérisé en ce que** les ramifications (338 ; 438) jointives de deux aubes (326 ; 426) voisines délimitent entre elle un chenal (350 ; 450) le long de toute la pale (336 ; 436), éventuellement continu et distant radialement de la virole.

13. Aubage (234 ; 334 ; 434) selon l'une des revendications 1 à 12, **caractérisé en ce que** la virole est une première virole (230 ; 330 ; 430), ou le segment est un premier segment de virole, l'aubage comprenant en outre une deuxième virole (232 ; 332 ; 432) ou un deuxième segment de virole concentrique à la première virole ou au premier segment de virole respectivement, les aubes (226 ; 326 ; 426) s'étendant radialement entre les viroles ou les segments de virole.

14. Aubage (34 ; 234 ; 334 ; 434) selon la revendication 13, **caractérisé en ce qu'**au moins une aube ou chaque aube (226 ; 326 ; 426) comprend des ramifications (238 ; 338 ; 438) liées à la première virole et d'autres ramifications liées à la deuxième virole ou au premier segment de virole et au deuxième segment de virole respectivement.

15. Turbomachine (2) comprenant au moins un aubage, **caractérisée en ce que** le au moins un ou chaque aubage (34 ; 234 ; 334 ; 434) est conforme à l'une des revendications 1 à 14, préférentiellement la turbomachine (2) comprend un compresseur (4 ; 6) avec des rangées d'aubages, au moins un ou chaque aubage (34 ; 234 ; 334 ; 434) de compresseur étant conforme à l'une des revendications 1 à 14.

## Patentansprüche

1. Beschaufelung (34; 234; 334; 434) einer axialen Turbomaschine (2), mit einer kreisförmigen oder halbkreisförmigen Reihe von Schaufeln (24; 26; 226; 326; 426), die sich radial erstrecken, wobei jede Schaufel ein Blatt (36; 236; 336; 436) und seitliche Verzweigungen (38; 238; 338; 438) umfasst und jede Verzweigung ein mit dem Blatt verbundenes Ende und ein radial dem Blatt gegenüberliegendes Ende beinhaltet,
**dadurch gekennzeichnet, dass** sie außerdem Folgendes umfasst
einen Mantelring oder ein Mantelringsegment (30; 32; 230; 232; 330; 332; 430; 432), das mit mindestens zwei gegenüberliegenden Enden von zwei benachbarten Verzweigungen (38; 138; 238; 338; 438) von zwei benachbarten Schaufeln (24; 26; 226; 326; 426) und/oder ein und derselben Schaufel verbunden ist, um die Blätter (36; 236; 336; 436) mit dem Mantelring (30; 32; 230; 232; 330; 332; 430; 432) oder dem Mantelringsegment anhand ihrer seitlichen Verzweigungen (38; 238; 338; 438) zu verbinden.

2. Beschaufelung (34; 234; 334; 434) nach Anspruch 1, **dadurch gekennzeichnet, dass** mindestens eine oder jede der Verzweigungen (38; 238; 338; 438) im Verhältnis zur radialen Richtung und/oder im Verhältnis zu jeder Richtung rechtwinklig zur Oberfläche des Mantelrings oder des Mantelringsegments (30; 32; 230; 232; 330; 332; 430; 432) geneigt ist.

3. Beschaufelung (34; 234; 334; 434) nach einem der Ansprüche 1 bis 2, **dadurch gekennzeichnet, dass** mindestens eine oder jede der Verzweigungen (38; 238; 338; 438) einen radialen Abschnitt beinhaltet, der sich vom Mantelring oder Mantelringsegment (30; 32; 230; 232; 330; 332; 430; 432) ausgehend rechtwinklig erstreckt.

4. Beschaufelung (434) nach einem der Ansprüche 1 bis 3, **dadurch gekennzeichnet, dass** die Reihe von Schaufeln mindestens zwei Schaufeln (426) mit Verzweigungen (438) beinhaltet, die mit dem Mantelring (432) verbunden sind und eine Schaufel, deren Blatt (436) ein Ende aufweist, das mit dem Mantelring (432) verbunden ist, wobei die genannten Schaufeln (426) eventuell an der Seite, die dem genannten Mantelring (432) radial gegenüberliegt, ebenfalls miteinander verbunden sind.

5. Beschaufelung (34; 234; 334; 434) nach einem der Ansprüche 1 bis 4, **dadurch gekennzeichnet, dass** die Verzweigungen (38; 238; 338; 438) und der Mantelring (30; 32; 230; 232; 330; 332; 430; 432) eine eventuell durchgehende Röhre (48) bilden, die das Blatt (36; 236; 336; 436) durchschneidet.

6. Beschaufelung (34; 234; 334; 434) nach einem der Ansprüche 1 bis 5, **dadurch gekennzeichnet, dass** sich mindestens eine oder jede der Verzweigungen (38; 238; 338; 438) über den größten axialen Teil des Mantelrings (30; 32; 230; 232; 330; 332; 430; 432) erstreckt.

7. Beschaufelung (34) nach einem der Ansprüche 1 bis 6, **dadurch gekennzeichnet, dass** mindestens eine oder jede der Verzweigungen (38) einen Befestigungsabschnitt beinhaltet, der eine Öffnung (44) durchquert, die im Mantelring (32) ausgebildet ist, wobei der Befestigungsabschnitt eine Befestigungsöffnung beinhaltet, die auf der Verzweigung ausgebildet ist, oder eine Oberfläche mit Vorsprüngen, die fest mit dem Mantelring (32) verbunden ist.

8. Beschaufelung (234; 334; 434) nach einem der Ansprüche 1 bis 6, **dadurch gekennzeichnet, dass** die Verzweigungen (238; 338; 438) von mindestens einer Schaufel oder von jeder Schaufel (226; 326; 426) einstückig mit dem Mantelring (230; 232; 330; 332; 430; 432) und dem dazugehörigen Blatt gebildet sind, wobei die Verzweigungen, die Blätter und der Mantelring durch additive Produktion auf der Basis eines eventuell metallischen Pulvers ausgeführt worden sind.

9. Beschaufelung (34; 234; 334; 434) nach einem der Ansprüche 1 bis 8, **dadurch gekennzeichnet, dass** mindestens eine oder jede der Verzweigungen (38; 238; 338; 438) eine Vorderkante (40) und eine Hinterkante (42) aufweist, wobei sich mindestens eine, vorzugsweise jede der Vorderkanten (40) und jede der Hinterkanten (42) vom Mantelring (30; 32; 230; 232; 330; 332; 430; 432) aus erstreckt.

10. Beschaufelung (334; 434) nach einem der Ansprüche 1 bis 9, **dadurch gekennzeichnet, dass** die Verzweigungen (338; 438) von mindestens zwei benachbarten Schaufeln (326; 426) aneinanderliegen, wobei eventuell die benachbarten Verzweigungen jedes Paares von Schaufeln aneinanderliegen.

11. Beschaufelung (34; 234; 334; 434) nach Anspruch 10, **dadurch gekennzeichnet, dass** die Schaufeln (326) mehrere Sätze von Schaufeln bilden, wobei die Verzweigungen (338) eines Satzes von Schaufeln zwischen benachbarten Verzweigungen (338) von benachbarten Schaufeln desselben Satzes aneinanderliegen und die benachbarten Verzweigungen (338) von mindestens zwei benachbarten Sätzen von Schaufeln (326) in einigem Abstand in Umfangsrichtung vom Mantelring oder Mantelringsegment (330; 320) entfernt sind.

12. Beschaufelung (334; 434) nach einem der Ansprüche 10 bis 11, **dadurch gekennzeichnet, dass** die aneinanderliegenden Verzweigungen (338; 438) von zwei benachbarten Schaufeln (326; 426) untereinander einen Kanal (350; 450) entlang des gesamten Blattes (336; 436) begrenzen, eventuell durchgehend und in radialem Abstand vom Mantelring.

13. Beschaufelung (234; 334; 434) nach einem der Ansprüche 1 bis 12, **dadurch gekennzeichnet, dass** der Mantelring ein erster Mantelring (230; 330; 430) ist oder das Segment ein erstes Mantelringsegment ist, wobei die Beschaufelung außerdem einen zweiten Mantelring (232; 332; 432) oder ein zweites Mantelringsegment beinhaltet, das sich konzentrisch zum ersten Mantelring oder Mantelringsegment verhält, wobei sich die Schaufeln (226; 326; 426) radial zwischen den Mantelringen oder Mantelringsegmenten erstrecken.

14. Beschaufelung (34; 234; 334; 434) nach Anspruch 13, **dadurch gekennzeichnet, dass** mindestens eine Schaufel oder jede Schaufel (226; 326; 426) Verzweigungen (238; 338; 438) beinhaltet, die mit dem ersten Mantelring verbunden sind und weitere Verzweigungen, die jeweils mit dem zweiten Mantelring oder mit dem ersten Mantelringsegment und dem zweiten Mantelringsegment verbunden sind.

15. Turbomaschine (2) mit mindestens einer Beschaufelung, **dadurch gekennzeichnet, dass** mindestens eine oder jede Beschaufelung (34; 234; 334; 434) einem der Ansprüche 1 bis 14 entspricht, wobei die Turbomaschine (2) vorzugsweise einen Kompressor (4; 6) mit Reihen von Beschaufelungen beinhaltet, wobei mindestens eine oder jede Beschaufelung (34; 234; 334; 434) des Kompressors einem der Ansprüche 1 bis 14 entspricht.

## Claims

1. Blading (34; 234; 334; 434) of an axial-flow turbomachine (2), comprising a circular or semi-circular row of blades (24; 26; 226; 326; 426) extending radially, each blade comprising a paddle (36; 236; 336; 436) and lateral branches (38; 238; 338; 438), each branch having an end joined to the paddle and an end radially opposite the paddle,
**characterized in that** said blading also comprises
a shroud or a shroud segment (30; 32; 230; 232; 330; 332; 430; 432) connected to at least two opposite ends of two adjacent branches (38; 138; 238; 338; 438) of two adjacent blades (24; 26; 226; 326; 426) and/or of the same blade so as to connect the paddles (36; 236; 336; 436) to the shroud (30; 32; 230; 232; 330; 332; 430; 432) or to the shroud segment via the lateral branches (38; 238; 338; 438) of the paddles.

2. Blading (34; 234; 334; 434) according to Claim 1, **characterized in that** at least one or each branch (38; 238; 338; 438) is generally inclined in relation to the radial direction and/or in relation to any perpendicular to the surface of the shroud or the shroud segment (30; 32; 230; 232; 330; 332; 430; 432).

3. Blading (34; 234; 334; 434) according to one of Claims 1 or 2, **characterized in that** at least one or each branch (38; 238; 338; 438) comprises a radial portion extending perpendicularly from the shroud or the shroud segment (30; 32; 230; 232; 330; 332; 430; 432).

4. Blading (434) according to one of Claims 1 to 3, **characterized in that** the blade row comprises at least two blades (426) with branches (438) joined to the shroud (432) and a blade of which the paddle (436) has an end joined to the shroud (432), said blades (426) possibly being connected to one another on the radial side opposite said shroud (432).

5. Blading (34; 234; 334; 434) according to one of Claims 1 to 4, **characterized in that** the branches (38; 238; 338; 438) and the shroud (30; 32; 230; 232; 330; 332; 430; 432) form a conduit (48), possibly a continuous conduit, passing through the paddle (36; 236; 336; 436).

6. Blading (34; 234; 334; 434) according to one of Claims 1 to 5, **characterized in that** at least one or each branch (38; 238; 338; 438) extends over the axial majority of the shroud (30; 32; 230; 232; 330; 332; 430; 432).

7. Blading (34) according to one of Claims 1 to 6, **characterized in that** at least one or each branch (38) comprises a fixing portion passing through an opening (44) formed in the shroud (32), the fixing portion comprising a fixing orifice formed on the branch or a surface with bumps sealed to the shroud (32).

8. Blading (234; 334; 434) according to one of Claims 1 to 6, **characterized in that** the branches (238; 338; 438) of at least one blade or of each blade (226; 326; 426) are integral with the shroud (230; 232; 330; 332; 430; 432) and the associated paddle; the branches, the paddles and the shroud being made by powder-based, possibly metal powder-based, additive manufacturing.

9. Blading (34; 234; 334; 434) according to one of Claims 1 to 8, **characterized in that** at least one or each branch (38; 238; 338; 438) comprises a leading edge (40) and a trailing edge (42), at least one, preferably each leading edge (40) and each trailing edge (42) extending perpendicularly from the shroud (30; 32; 230; 232; 330; 332; 430; 432).

10. Blading (334; 434) according to one of Claims 1 to 9, **characterized in that** the branches (338; 438) of at least two adjacent blades (326; 426) are joined, the adjacent branches of each pair of adjacent blades possibly being joined.

11. Blading (34; 234; 334; 434) according to Claim 10, **characterized in that** the blades (326) form a plurality of sets of blades, the branches (338) of a set of blades being joined to adjacent branches (338) of adjacent blades within the same set, the adjacent branches (338) of at least two adjacent sets of blades (326) being arranged at a distance in the circumferential direction of the shroud or of the shroud segment (330; 320).

12. Blading (334; 434) according to one of Claims 10 to 11, **characterized in that** the joined branches (338; 438) of two adjacent blades (326; 426) delimit therebetween a channel (350; 450) along the entire length of the paddle (336; 436), said channel possibly being continuous and radially distant from the shroud.

13. Blading (234; 334; 434) according to one of Claims 10 to 12, **characterized in that** the shroud is a first shroud (230; 330; 430), or the segment is a first shroud segment, the blading also comprising a second shroud (232; 332; 432) or a second shroud segment concentric with the first shroud or with the first shroud segment respectively, the blades (226; 326; 426) extending radially between the shrouds or the shroud segments.

14. Blading (34; 234; 334; 434) according to Claim 13, **characterized in that** at least one blade or each blade (226; 326; 426) comprises branches (238; 338; 438) connected to the first shroud and other branches connected to the second shroud or to the first shroud segment and to the second shroud segment respectively.

15. Turbomachine (2) comprising at least one blading, **characterized in that** the or at least each blading (34; 234; 334; 434) is formed in accordance with one of Claims 1 to 14, the turbomachine (2) preferably comprising a compressor (4; 6) that has rows of bladings, at least one or each compressor blading (34; 234; 334; 434) being formed in accordance with one of Claims 1 to 14.
